(19) Europäisches Patentamt
European Patent Office
Office européen des brevets

(11) **EP 1 229 005 B1**

(12) **EUROPEAN PATENT SPECIFICATION**

(45) Date of publication and mention
of the grant of the patent:
**02.04.2008  Bulletin 2008/14**

(51) Int Cl.:
*C04B 24/32* *(2006.01)*       *C04B 24/26* *(2006.01)*

(21) Application number: **02002391.7**

(22) Date of filing: **31.01.2002**

(54) **Storage and/or transportation method of alkoxy (poly) alkylene glycol-containing materials**

Methode zum Lagern und/oder Transportieren von Alkoxy (poly) Alkylene Glykol enthaltende Materialien

Méthode de stockage et/ou de transport de matériaux contenant du (poly) alkylène glycol alkoxylé

(84) Designated Contracting States:
**BE DE IT**

(30) Priority:  **01.02.2001  JP  2001026111**

(43) Date of publication of application:
**07.08.2002  Bulletin 2002/32**

(73) Proprietor: **NIPPON SHOKUBAI CO., LTD.**
**Osaka-shi, Osaka 541-0043 (JP)**

(72) Inventor: **Nagare, Koichiro**
**Yokohama-shi,**
**Kanagawa 230-0073 (JP)**

(74) Representative: **Brehm, Hans-Peter et al**
**Hansmann & Vogeser**
**Patent- und Rechtsanwälte**
**Postfach 1164**
**82301 Starnberg (DE)**

(56) References cited:
- **DATABASE CA [Online] CHEMICAL ABSTRACTS SERVICE, COLUMBUS, OHIO, US; HIRATA, TAKESHI ET AL: "Method for storage and transport of alkoxypolyalkylene glycols for manufacture of cement dispersants" retrieved from STN Database accession no. 133:8285 XP002233882 & JP 2000 154049 A (NIPPON SHOKUBAI KAGAKU KOGYO CO., LTD., JAPAN) 6 June 2000 (2000-06-06)**
- **DATABASE CA [Online] CHEMICAL ABSTRACTS SERVICE, COLUMBUS, OHIO, US; HIRATA, TAKESHI ET AL: "Solutions for polycarboxylic acids with good storage stability and method for storing them for cement additives" retrieved from STN Database accession no. 133:21357 XP002233883 & JP 2000 159973 A (NIPPON SHOKUBAI KAGAKU KOGYO CO., LTD., JAPAN) 13 June 2000 (2000-06-13)**

Remarks:
The file contains technical information submitted after the application was filed and not included in this specification

**Description**

TECHNICAL FIELD

The present invention is related to a method for treating an alkoxypolyalkylene glycol-containing material suitable for producing a polymer suitable for cement additive,
which treatment is carried out under inert gas atmosphere and comprises a step of filling a vessel, a step of storing and/or transferring and a step of discharging in that order,
wherein said alkoxypolyalkylene glycol being represented by the following general formula (1):

$$R^1O(R^2O)_nH \qquad (1)$$

wherein:

$R^1$ represents a hydrocarbon group containing 1 to 30 carbon atoms;
$R^2O$ group represents an oxyalkylene group containing 2 to 18 carbon atoms, and each $R^2O$ group may be the same or different; and
"n" represents the average number of moles of oxyalkylene groups represented by $R^2O$ as added and is a number of 2 to 300.

BACKGROUND OF THE PRESENT INVENTION

The fore-mentioned alkoxypolyalkylene glycols may be esterified with an unsaturated monomer such as (meth) acrylic acid, in order to provide (meth)acrylic ester monomers, which are suitable for producing a polymer suitable for cement additive. Further, alkoxypolyalkylene glycol-containing materials such as alkylene oxide adducts with an unsaturated alcohol may be used for producing a polymer suitable for cement additive. Such polymers suitable for cement additive may be used not only as cement additives (cement dispersants), but also as dispersants for pigments such as calcium carbonate and carbon black, further as dispersants for gypsum-water slurries, as dispersants for coal-water slurries (CWMs), and as a dispersing agent for inks, and still further may be used as scaling inhibitors and thickening agents.
Those alkoxypolyalkylene glycols may be produced by subjecting an alcohol and an alkylene oxide, such as ethylene oxide or propylene oxide to an addition reaction under alkaline conditions. The thus obtained alkoxypolyalkylene glycols are generally stored and/or transferred in a vessel before they are used as starting materials for preparing a polymer suitable for cement additive. For example, those glycols are stored for a while or for a long period before starting the polymer preparation or those glycols have to be transferred to another place when the plant for the production of the alkoxypolyalkylene glycol is remote from the plant for preparing the polymer suitable for cement additive.
Even when those alkoxypolyalkylene glycols form solids at ordinary temperature, they comprise a high temperature after preparation, and therefore they are filled in liquid status into the vessel. Further, in order to facilitate the discharging of the alkoxypolyalkylene glycols out of said vessel, they are maintained in liquid state within a heat insulation during said steps of storing and/or transferring. However, when maintained at an elevated temperature during a certain period, those alkoxypolyalkylene glycols will be oxidized, resulting in an increase of the peroxide value (POV). Further, when those alkoxypolyalkylene glycol-containing materials contain an unsaturated bond, the extended maintenance at elevated temperatures may cause a polymerization reaction leading to the formation of gel-like matter. Further, when the alkoxypolyalkylene glycols are reacted to (meth)acrylic ester monomers by esterification with (meth)acrylic acid, a probability of forming said gel-like matter during the esterification reaction is high, too. Furthermore, the alkylene oxide adducts may be thermally decomposed, or the (meth)acrylic ester monomer formed therefrom may be hydrolyzed. By way of example, the thermal decomposition of an alkylene oxide adduct with an unsaturated alcohol is illustrated by the below formula (1), and the hydrolysis of a (meth)acrylic ester monomer is illustrated by the below formula (2):

$$H_2C=C(R)CH_2CH_2O(CH_2CH_2O)_nH \rightarrow H_2C=CH(R)CH=CH_2 + HO(CH_2CH_2O)_nH \qquad (1)$$

$$H_2C=C(R)CO(OCH_2CH_2)_nOCH_3 + H_2O \rightarrow H_2C=C(R)COOH + H(OCH_2CH_2)_nOCH_3 \qquad (2)$$

The increase of the peroxide value (POV) and/or the formation of gel-like matter and/or other troubles occurring during said storing and/or transferring steps the of alkoxypolyalkylene glycol-containing material in liquid state result in a decreased purity, respectively, in an increased content of impurities of the polymer product prepared therefrom. This causes a deterioration of the quality of said polymer, and/or causes a deterioration of the quality or of the performance of the chemical product obtained from said polymer. For example, if an alkylene oxide adduct with an unsaturated alcohol is thermally decomposed, then the thus obtained product will no longer comprise the molecular weight desired for preparing a polymer suitable for cement additive. In general, the content of polyethylene glycol (PEG) within cement additives will cause an increase of the air content within the hardened cement composition. Thus, if the fore-mentioned product will contain a higher content of PEG, this may cause troubles such as a decreased strength due to an increased air content within the hardened cement structure, and, in addition, may cause a decrease of the content of other active ingredients within the polymer which may result in a decrease of the water reducing property and of other performance characteristics required for cement dispersants.

Furthermore, in cases where R in the above formula (1) $R^1O(R^2O)_nH$ represents H, the thermal decomposition may cause the generation of isoprene; however, the presence of isoprene is un-wanted, because the odor of isoprene will impair the working environment or the thus produced isoprene may polymerize to form impurities or may copolymerize with the intended polymer, which may decrease the performance characteristics of the final product.

A cement additive containing polymers derived from the above-mentioned alkoxypolyalkylene glycol-containing materials improves the flowability of a cement composition and, at the same time, improves the strength and durability of the hardened cement products. However, when said polymer is contaminated with impurities, and/or when said polymer is deteriorated in its performance characteristics or quality, then the resulting hardened products, such as civil engineering structures or buildings, may show decreased levels of strength and durability, which, by it selves may cause problems such as decreased safety and/or increased repairing costs.

BACKGROUND ART

Un-examined (Kokai) Japanese Patent Publication No. 2000-154049 is mainly related to a copolymer suited as cement additive. This copolymer is made by copolymerizing (alkoxypolalkylene glycol)-[(meth)acrylic acid]-mono ester with (meth)acrylic acid and, may be, other additional polymerizable monomer. The (alkoxypolyalkylene glycol)-[(meth)acrylic acid]-mono ester has been prepared from alkoxypolyalkylene glycol and (meth)acrylic acid ester under esterification reaction conditions. The purity and quality of the alkoxypolyalkylene glycol-containing material influences the quality and usefulness of the final cement additive as demonstrated with examples and comparative examples.

The alkoxypolyalkylene glycol is prepared from a monohydric alcohol in a waterfree and strong alkaline reaction system under alkylene oxide addition polymerisation conditions at elevated temperature. The product emanates at elevated temperature in liquid form.

Often, there is no opportunity to processing further the just obtained alkoxypolyalkylene glycol at the same time and/or at the same place in the factory. Thus, there arises the problem of storing the just obtained alkoxypolyalkylene glycol and/or transferring said glycol to another factory. Storing and/or transferring has to be performed under conditions which will not impair the purity and quality of the just obtained alkoxypolyalkylene glycol. Main reasons for an impaired quality are the dimerization and formation of peroxides. The dimerization causes the formation of gel-like material which impairs the quality of the final cement additive.

In order to avoid such a decrease of purity and quality, this document JP-A-2000-154049 teaches to maintain the just prepared alkoxypolyalkylene glycol during said storing and/or transferring steps under an inert gas atmosphere and/or to add a radical scavenger, thus as t-butyl hydroxyl toluene.

Thus, this document JP-A-2000-154049 discloses a method for treating an alkoxypolyalkylene glycol-containing material suitable for producing a polymer suitable for cement additive,
which treatment is carried out under an inert gas atmosphere and comprises a step of filling a vessel, a step of storing and/or transferring and a step of discharging in said order.

OBJECT UNDERLYING THE PRESENT INVENTION

Starting therefrom, it is the objective technical problem to be solved by the present invention to provide a method according to the generic art (presented by document JP-A-2000-154049) which enables to obtain an alkoxypolyalkylene glycol-containing material suitable for producing a polymer suitable for cement additive, which alkoxypolaylkylene glycol-containing material comprises a higher purity and a better quality after an extended period of storing and/or transferring thereof.

SUMMARY OF THE PRESENT INVENTION

In order to solve the fore-mentioned objective technical problem, the present invention provides a method for treating an alkoxypolyalkylene glycol-containing material suitable for producing a polymer suitable for cement additive which treatment is carried out under an inert gas atmosphere and comprises a step of filling a vessel, a step of storing and/or transferring and a step of discharging in that order,

said alkoxypolyalkylene glycol being represented by the following general formula (1):

$$R^1O(R^2O)_nH \qquad (1)$$

wherein:

$R^1$ represents a hydrocarbon group containing 1 to 30 carbon atoms;
$R^2O$ group represents an oxyalkylene group containing 2 to 18 carbon atoms, and each $R^2O$ group may be the same or different, and
"n" represents the average number of moles of oxyalkylene groups represented by $R^2O$ as added and is a number of 2 to 300;

wherein
said vessel has a capacity of from 1 to 30 m$^3$; and
said step of storing and/or transferring being carried out at a temperature not higher than the solidifying point of the material suitable for producing a polymer suitable for cement additive; and
said step of discharging is initiated by heating and melting said material suitable for producing a polymer suitable for cement additive within said vessel at a temperature not lower than the solidifying point thereof in order to discharge said material suitable for producing a polymer suitable for cement additive out from said vessel in liquid form.

Advantageful embodiments of the fore-mentioned method are subject of the dependent claims.

BRIEF DESCRIPTION OF THE DRAWING

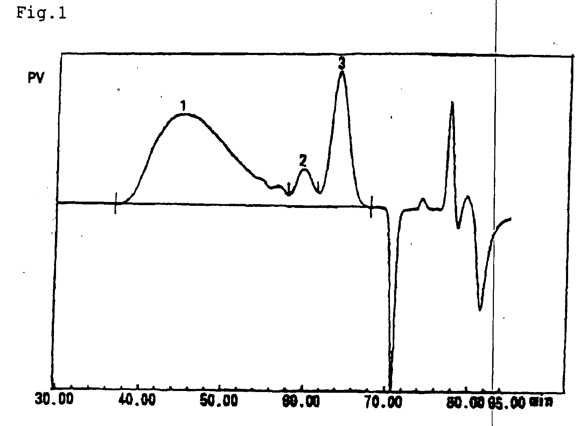

Fig. 1 is a GPC chart of an aqueous solution of the polymer (A3) as obtained according to Example 3.

DETAILED DESCRIPTION OF THE PRESENT INVENTION

The alkoxypolyalkylene glycol-containing material as represented by the above general formula (1) may form one single species or may form a combination of two or more species of said type. Such compound preferably forms a basic component of the material suitable for producing a polymer suitable for said cement additive. In the following, said material suitable for producing a polymer suitable for cement additive is in short termed: "material for cement additive polymer". In this case, the material suitable for cement additive polymer may contain in addition other additional component(s) or may be free of those other addinal component. In cases where the alkoxypolyalkylene glycol containing material is an alkylene oxide adduct, with an unsaturated alcohol this unsaturated alcohol may be selected, among others, from allyl alcohol, methallyl alcohol, 3-buten-1-ol, 3-methyl-3-buten-1-ol, 3-methyl-2-buten-1-ol and 2-methyl-3-buten-2-ol.
In the above-stated general formula (1), $R^1$ represents a hydrocarbon group containing 1 to 30 carbon atoms; $R^2O$ group represents an oxyalkylene group containing 2 to 18 carbon atoms and each $R^2O$ group may be the same or different ; and "n" represents the average number of moles of the added oxyalkylene groups represented by $R^2O$ and is a number of 2 to 300. In a preferred embodiment, $R^2O$ represents an oxyalkylene group containing 2 to 8 carbon atoms; and "n" is a number of 10 to 200. The "average number of added moles" means the mean value of the number of moles of the repeating unit in,each mole of the compound.
If $R^1$ contains more than 30 carbon atoms and/or $R^2O$ contains more than 18 carbons atoms, than the water solubility of the polymers may be decreased and, when such polymers are used as cement additives, the intended performance characteristics thereof, namely cement dispersing capacity and so on, may be deteriorated. If the value of "n" exceeds 300, than the reactivity of the compound represented by general formula (1) with (meth) acrylic acid may be decreased.
The suitable range of the number of carbon atoms contained in $R^1$ or $R^2O$, is selected according to the performance and other characteristics as required for cement additives. As for $R^1$, For instance $R_1$ may be an alkyl group such as methyl, ethyl, n-propyl, isopropyl, n-butyl, tert-butyl,pentyl, hexyl,octyl, nonyl, 2-ethylhexyl, decyl, dodecyl, undecyl, tridecyl, tetradecyl, pentadecyl, hexadecyl, heptadecyl, octadecyl, nonadecyl, eicosyl, heneicosyl or docosyl; an aryl group such as phenyl; an alkylphenyl group such as benzyl or nonylphenyl; a cycloalkyl group such as cyclohexyl; an alkenyl group such as vinyl, allyl, 3-butenyl or 3-methyl-3-butenyl; or an alkynyl group. Among these, straight or branched $C_{1-18}$ alkyl groups and aryl groups are preferred, and methyl, ethyl, propyl, butyl and phenyl groups are even more preferred, for the $R^1$ hydrocarbon group.
The $R^2O$ group may be selected from oxyethylene, oxypropylene, oxybutylene and oxystyrene groups; among these, oxyethylene, oxypropylene and oxybutylene groups are preferred. $R^2O$ represent the repeating units of the compound represented by the general formula (1); and these repeating units may be the same or different. In cases, where the compound has two or more different species of repeating units, the mode of addition of the respective repeating units is not particularly restricted, but includes block or random distribution.

The range of the above-mentioned number "n" is selected according to the intended performance and other characteristics as required for the cement additive; basically, "n" is 2 to 300; and more preferred "n" is 5 to 200, and still more preferred 8 to 150. For use as thickening agents, for instance, n is preferred 10 to 250, and even more preferred is 50 to 200.

In the storing and/or transferring step of the treating method according to the present invention, "storing" mens a procedure comprising placing and storing a substance in a storage vessel for a while or continuously for a long period of time and "transferring" means a procedure involving transfer of a substance and comprising moving a substance using a container, drum, oil can or plastic tank or a similar vessel for transferring and is also called "transportation". The storage vessel and the transfer vessel respectively includes not only containers, drums and the like, but also tanks on the ground, underground tanks and the like. According to a necessary feature of the present invention, this vessel, container, drum and/or tank has a capacity of from 1 to 30 $m^3$. Those vessels are preferably made from a material enabling a tightly closed state during storing and/or transferring, and hardly showing deterioration or degeneration in a temperature range of from -50°C to 150°C. Suited materials include, for example, stainless steel (SUS) species, aluminum and iron. In the treating method according to the present invention, the vessel(s) may be used either alone for storing or either alone for transferring or may be used for both storing and transferring of the alkoxypolyalkylene glycol-containing material for cement additive polymer.

The treating method according to the present, invention comprises a step of filling a vessel, a step of storing and/or transferring and a step of discharging, in that order. In the step of filling a vessel, a storage vessel or transfer vessel, is partly or fully filled with a material for cement additive polymer and, a void space within the vessel, constitutes a gaseous phase portion, and the material for cement additive polymer constitutes a liquid phase portion. In the storing and/or transferring step, the vessel filled with the material for cement additive polymer is stored or transferred and, in the step of discharging, the material for cement additive polymer is partly or wholly taken out from the storage vessel or transfer vessel after the step of storing and/or transferring.

According to the present invention, said step of storing and/or transferring is carried out at a temperature not higher than the solidifying point of the material suitable for cement additive polymer. When such measure is taken, the alkoxypolyalkylene glycol will no longer get in contact with oxygen in air at high temperatures; in addition, since the material suitable for cement additive polymer becomes a solid, the chance of the alkoxypolyalkylene glycol to get in contact with oxygen in air is reduced. As a result, an increase of the peroxide value (POV) due to oxidation is prevented. In cases where the material suitable for cement additive polymer comprises only a single alkoxypolyalkylene glycol, the solidifying point of the material suitable for cement additive polymer is the solidifying point of said alkoxypolyalkylene glycol. In cases where the material contains another component or other components, the solidifying point of the material means the solidifying point (also called pour point) of the mixture of the alkoxypolyalkylene glycol and said other component(s).

In order to lower the temperature of the material suitable for cement additive polymer to a level not higher than the solidifying point thereof the material may be transferred to a vessel having no heat insulation and will be cooled to an ordinary temperature of about 20°C by flowing a cooling medium through a jacket of said vessel. When the alkoxypolyalkylene glycol comprises a solidifying point not lower than 30°C, it is desirable that the vessel does not comprise a heat insulation.

The solidifying point of an alkoxypolyalkylene glycol increases when the weight average molecular weight thereof increases or when the number "n" in general formula (1) increases. The following Table 1 shows the relationships between the solidifying point and the weight average molecular weight and the number "n in general formula (1) for an ethylene oxide adduct with alcohol and for an ethylene oxide adduct with an unsaturated alcohol.

Table 1:

| | Alcohol-ethylene oxide adduct | | | Unsaturated alcohol-ethylene oxide adduct | |
|---|---|---|---|---|---|
| | Production Example | | | Production Example | |
| Production Example | 1 | 2 | 3 | 4 | 5 |
| Weight average molecular weight | 472 | 1132 | 5312 | 526 | 2286 |
| Number n | 10 | 25 | 120 | 10 | 50 |
| Solidifying point [°C] | 10 | 40 | 55 | 17 | 52 |

According to the present invention, the step of discharging is initiated by heating and melting the material suitable for cement additive polymer within the vessel by raising the temperature to a level not lower than the solidifying point thereof in order to discharge said material out from said vessel in liquid form. This step enables a simple removal or taking out of said material suitable for cement additive polymer out from said vessel. The heating is carried out in a manner that will avoid troubles occurring in the production step and in a manner that will avoid a decrease of the performance and quality characteristics. For example, the material suitable for cement additive polymer is preferably melted at a temperature not higher than 150°C, even more preferred not higher than 110°C, still more preferred not higher than 70°C, over the solidifying point of said material.

The step of filling a vessel under inert gas atmosphere is not particularly restricted. Preferably, a vessel is first purged with an inert gas, such as nitrogen, and is then filled with the alkoxypolyalkylene glycol-containing material suitable for cement additive polymer to about 80 to 90% of the capacity thereof, and the resulting gaseous phase portion is further pressurized with an inert gas. Thereafter, the vessel is tightly closed and is maintained in a tightly closed state. When, after the filling step, the temperature of the material suitable for cement additive polymer is lowered to the solidifying point or below so that the step of storing and/or transferring of the material suitable for cement additive polymer may be carried out at a temperature not higher than the solidifying point thereof, the pressure within the vessel will decrease as the volume of the material decreases. Because, the gaseous phase portion within the interior space of the vessel is pressurized with an inert gas, and thereafter the vessel is tightly closed, the vessel inside pressure cannot decrease lower than the atmospheric pressure, and therefore, air cannot enter the vessel interior space. An increase in POV can be effectively prevented. Further by melting the material suitable for cement additive polymer at a temperature not lower than the solidifying point thereof within the tightly closed vessel enables to carry out the step of discharging without any increase of the POV.

It is preferred in the above step of discharging to effect the heating to such an extent that the pressure within the gaseous phase portion teaches a level higher than that pressure pressure level attained at the time of tightly closing the vessel in the step of filling. This enables to melt the material suitable for cement additive polymer with more certainty.

For raising the temperature to a level not lower than the solidifying point of the material suitable for cement additive polymer it is preferred to provide the vessel with an external jacket and heat the vessel by passing steam or warm water through the jacket. When the solidified material suitable for cement additive polymer is heated from outside the vessel, then the portion in contact with the vessel will melt first and will provide a liquid, upper layer during the progress of melting, while the unmelted portion will form a center lower layer, until finally, the whole solid body is melted. When the vessel temperature is measured by means of a thermometer fitted on the wall of the vessel, then only the temperature of the melted portion in the vicinity of the vessel wall can be measured; there is still the possibility that the center body of the material is not yet completely melted. When a container is used as the vessel for efficiently storing and/or transferring a large quantity of the material then there might be no means for confirming that the material suitable for cement additive polymer inside the vessel has been melted completely. In such a case, the material suitable for cement additive polymer may be melted with more certainty when the step of discharging includes a step of measuring the pressure of the gaseous phase portion the step of heating and melting the material within the tightly closed vessel is carried out so long until the gaseous phase pressure within the tightly closed vessel reaches a level higher than that pressure level at the time of tightly closing the vessel in the step of filling; this is a particularly preferred embodiment.

The selection of the inert gas to be used in the above step of filling a vessel is not particularly restricted; among others, nitrogen gas, helium gas, argon gas and the like, may be used. Here, nitrogen gas and helium gas are preferred in view of the cost and ease handling thereof. Nitrogen gas is more preferred. The method of purging the interior space of the vessel with an inert gas, compris the step of pressurizing the vessel with the inert gas, followed by the step of discharging the gas; this course of steps may be repeated several times. This method can effectively reduce the air content within the vessel. A preferred pressure for pressurizing the vessel is 0.01 to 1.0 MPa, still more preferred is 0.02 to 0.4 MPa. The step of discharging the inert gas, is preferably continued until a pressure of 0 to 0.01 MPa is reached. The number of repetitions of pressurization and discharging is not less than one, more preferred not less than three, and still more preferred not less than five.

It is preferred to purge the vessel with an inert gas in advance before filling the vessel with the raw material in question, in order to reach a sufficient purging of the vessel with the inert gas when filling the vessel with the alkoxypolyalkylene glycol-containing material suitable for cement additive polymer it is preferred to introduce such an amount of the material which will reach a filling percentage of the vessels interior space capacity of 50 to 98%; still more preferred is a filling percentage of 80 to 95% of said capacity. If the filling percentage is less than 50%, than the efficiency of using the vessel is low; a filling percentage higher than 95% may cause a problem concerning the vessel pressure resistance against thermal expansion. a vessel with the above material, It is preferred to provide the vessel with a safety valve otherwise, a valve belonging to the gaseous phase portion may be partly opened at the start of filling in order to avoid a pressurization of the interior space of the vessel upon filling, or to avoid a vessel fracture resulting from pressurization.

After filling the vessel with the above material in the described manner, the gaseous phase portion alone is preferably purged further with an inert gas in the same manner as described.

For using as a guideline for melting in the step of discharging, the temperature of the material in the vessel and the pressure of the gaseous phase portion are preferably measured and recorded just after completion of the step of filling.

In the practice of the invention, a radical scavenger is preferably added to the alkoxypolyalkylene glycol-containing material suitable for cement additive polymer. This enables a more efficient prevention of the formation of the gel-like matter resulting from an increase in POV. Suited radical scavenger includes, among others, tert-butylhydroxytoluene (2,6-di-tert-butyl-p-cresol; hereinafter also referred to as "BHT" for short), $\alpha,\alpha$-diphenyl-$\beta$-picrylhydrazyl, N,N,N',N'-tetraethyl-p-phenylenediamine, N-(3-N-oxyanilino-1,3-dimethylbutylidine)aniline oxide, p,p'-difluorodiphenylamino, chloranil, iodine and iron(III) chloride. These may be used singly or two or more of them may be used in combination. Among these, tert-butylhydroxytoluene is preferred.

The added amount of the above-stated radical scavenger is not particularly restricted as long as this amount efficiently prevents the increase in POV during storage and/or transfer. A preferred, amount is, for example, 10 to 1,500 ppm based on the alkoxypolyalkylene glycol. An amount less than 10 ppm will not produce a sufficient effect; an amount higher than 1,500 ppm, will not produce any extra effect. A level of 100 to 1,200 ppm is more preferred and a level of 200 to 1,000 ppm is still more preferred.

In the above-stated step of storing and/or transferring, without any particular limitation, the vessel is preferably kept tightly closed. In cases where the vessel is stored and/or transferred in an initial tightly closed state, the gaseous phase portion inside can remain sufficiently purged with an inert gas, so that the vessel in that state can be heated to a temperature not lower than the solidifying point in the step of discharging. This enables to take out the contents in a molten state with certainty by heating.the vessel until the temperature and pressure measured just after filling are attained even if the state of melting in the vessel cannot be confirmed by visual observation. Furthermore, even when the step of discharging cannot be carried out for some or other trouble immediately after melting, the gaseous phase remains purged with an inert gas and, therefore, there is no risk of deterioration in quality.

In the above-stated step of discharging, without any particularly limitation, however, it is preferred to partly open the gaseous phase portion and to pass an inert gas therethrough. This avoids any contact with air (oxygen) and prevents a damage of the vessel due to an excessive pressure increase and avoids any troubles due to depressurization.

During the above-stated step of storing and/or transferring or after the above-stated step of discharging, the POV of the obtained material suitable for cement additive polymer is preferably maintained at a level not higher than 2, more preferred not higher than 1, still more preferred not more than 0.7. This enables a prevention of the formation of the gel-like matter with more certainty.

The alkoxypolyalkylene glycol-containing material suitable for cement additive polymer as stored and/or transferred according to the present invention may comprise the monomer ester formed from said alkoxypolyalkylene glycol with a (meth) acrylic.

Alternatively, said alkoxypolyalkylene glycol-containing material may comprise an alkylene oxide adduct, with an unsaturated alcohol. Both kinds of alkoxypolyalkylene glycol-containing materials are described in detail in the above-mentioned document JP-A-2000-154049.

An embodiment of the present invention, namely the method of treating alkoxypolyalkylene glycol-containing material suitable for cement additive polymer, which method comprises a step of filling a vessel, a step of storing and/or transferring and a step of discharging is described in the following as an example; here, the material suitable for cement additive polymer production is a solid at ordinary temperature; and a container is used as the vessel. Such embodiment is typical example of the mode of performing the present invention but is not limitative thereof.

This container is equipped with a vent valve for introducing air or an inert gas into the container and a liquid inlet for introducing the material suitable for cement additive polymer into the container at the upper part thereof, and is further equipped with a discharge valve for discharging the container content at the lower part thereof, and is further equipped with a jacket having an inlet and outlet for steam for heating the container content. Such a container has a capacity of 1 to 30 m$^3$. For example, there may be mentioned an ISO container having a capacity of 17 to 24 m$^3$.

The step of filling a vessel, comprises (1) operation(s) replacing the vessel inside air by nitrogen gas, (2) filling the vessel with the material suitable for cement additive polymer, (3) purging the gaseous phase portion within the vessel with nitrogen, gas, (4) tightly closing the vessel and (5) pressurizing the vessel interior space with nitrogen gas.

The above-stated operations (1) or (3) are carried out by connecting a pipe (nitrogen gas line) for nitrogen gas feeding with the vent valve of the container and feeding nitrogen gas into the container interior space. Either, the container or the nitrogen gas line is equipped with a pressure gauge for controlling the container inside pressure and is further equipped with a purge valve for adjusting the pressure. After raising the internal pressure to 0.03 to 0.2 Pa by feeding nitrogen gas into the container interior space, the purge valve is gradually opened to lower the internal pressure to 0.01 to 0.02 Pa. This procedure is preferably repeated at least 4 times, in order to reduce the oxygen concentration in the gaseous phase portion within the container to a level not higher than 1, 000 ppm.

The above-stated operation (2) is carried out by connecting a pipe (filling line) for filling the container with the material suitable for cement additive polymer through the liquid inlet thereof. Simultaneously with the start of filling, the purge valve is gradually opened to thereby adj ust the internal pressure. After completion the filling of the material suitable for cement additive polymer, all the valves are closed and the filling line is disconnected from the container.

The above-stated operation (5) is carried out by opening the vent valve of the container and feeding nitrogen gas into the container to thereby raise the internal pressure to 0.05 to 0.5 Pa. Thereafter, the vent valve is closed and then the purge valve is opened to adjust the internal pressure. After completion of these operations, the nitrogen gas line is disconnected from the container. Thereafter, the container presents a tightly closed state, and is subjected to the step of storing and/or transferring. During this step the material suitable for cement additive polymer is maintained at a temperature not higher than the solidifying point thereof, if necessary by cooling, but without heating or using a heat insulating of the container, so that any formation of the gel-like matter and any occurrence of decomposition reactions can be satisfactorily inhibited.

The above-mentioned step of discharging comprises the operation(s) (1) raising the temperature of the container content, wherein the container remains in a tightly closed state, (2) raising the temperature of the liquid discharge valve of the container, and (3) taking out the material suitable for cement additive polymer after complete melting thereof.

The above-stated operation (1) is carried out by connecting a pipe (steam line) for supplying steam to the steam inlet of the jacket of the container, connecting a pipe for discharging steam, if necessary, to the steam outlet, and raising the temperature of the container content by passing steam through the steam line. The container inside temperature is preferably controlled not to exceed the solidifying temperature of the material suitable for cement additive polymer by more than 150°C, even more preferred by more than 70°C. Heating to such an extent that the pressure of the gaseous phase portion becomes higher than the pressure at the time of tightly closing the vessel in the step of filling, enables a more certain melting of the material suitable for cement additive polymer. This method is particularly effective in cases where it is difficult to confirm whether any solid portion of the material suitable for cement additive is remaining in the container.

The above-stated operation (2) is carried out by blowing steam against the surrounding of the liquid discharge valve, or by winding a readily deformable steam line made of copper or the like around said discharge valve, covering the line with a heat insulator and raising the temperature with steam.

The above-stated operation (3) is carried out by gradually opening the purge valve, after a complete temperature rise in the container interior space, to reduce the gauge pressure to 0 Pa and then confirming whether a solid portion of the material suitable for cement additive polymer is remaining or not, while passing nitrogen gas through said purge valve. If a solid portion is found remaining, nitrogen gas is fed into the container interior space in the same manner as described above, and then the above operation (1) is carried out and such procedure is repeated until no more solid portion is found remaining. Thereafter, while nitrogen gas is still passed through the gaseous phase portion of the container, a pipe (transfer line) for transferring the material suitable for cement additive polymer to a raw material tank is connected with the liquid discharge valve. Thereafter, said liquid discharge valve is opened, and the material suitable for cement additive polymer is transferred to the raw material tank. The transfer is preferably carried out by providing the transfer line with a feeding pump, and the transfer line and/or the feeding pump is preferably protected against cooling-down by winding a steam line around the same. After confirming that no portion of the material suitable for cement additive polymer is left remaining in the container, the steam line and transfer line are disconnected from the container, whereupon the step of discharging is finished.

The treating method of an alkoxypolyalkylene glycol-containing material suitable for cement additive polymer according to the present invention can satisfactorily prevent the formation of gel-like matter and any decomposition reactions and thereby can satisfactorily prevent any troubles in the production process which may impair the performance characteristics and the quality of cement additives as well as of various chemical products such as pigment dispersants for pigments such as calcium carbonate, and carbon black, further as dispersants for gypsum-water slurries, as dispersants for coal-water slurries (CWMs) as a dispersing agent for inks, and still further may be used as scaling inhibitors and thickening agents.

EXAMPLES

The following examples serve for illustration of the present invention. These examples are, however, by no means limitative of the scope of the present invention. Unless otherwise specified, "part(s)" means "part(s) by weight" and "%" means "% by weight".

Production Example 1:

An autoclave equipped with a thermometer, a pressure gauge and a stirrer was charged with 4 parts of flaky sodium hydroxide. A sufficient nitrogen substitution was performed by repeated pressurization with nitrogen and discharging. Then, 575 parts methanol were added, and the temperature of the mixture was raised to 90°C. The initial pressure was set at 0.15 MPa, and 7, 900 parts ethylene oxide weve added over 8 hours, during which the reaction temperature was maintained at 125 $\pm$ 5°C, and the reaction pressure was maintained at 0.78 MPa or below. Further, this reaction temperature was maintained for further 2 hours to complete the addition reaction of ethylene oxide with methanol whereby methoxypoly (n= 10) ethylene glycol [$CH_3O(CH_2CH_2O)_{10}H$] was obtained, resulting from adding 10 moles ethylene oxide per each mole methanol. The thus obtained alkoxypolyalkylene glycol (1) was measured, just after the addition reaction, for peroxide value by the method described below. A peroxide value of 0.0 milliequivalent/g was found. The alkoxypolyalkylene glycol (1) had a solidifying point of 10°C.

Method of peroxide value determination:

A 10-g portion of the alkoxypolyalkylene glycol was accurately measured in an Erlenmeyer flask equipped with a stopcock, and 50 ml mixed solvent (mixture of 500 ml isopropyl alcohol, 100 ml water and 150 ml acetic acid) were added to dissolve the sample. After dissolution of the sample, while the flask interior space was purged with nitrogen gas, 1 ml saturated potassium iodide solution was added, and the mixture was stirred for 1 minute and then allowed to stand in the dark for 30 minutes, thus providing a yellow transparent test solution. Then, this test solution was titrated with 0.01 N sodium thiosulfate until the brown color of the test solution disappeared. The amount (ml) of the titrant sodium thiosulfate was determined, and the peroxide value was calculated according to the formula given below. A blank value (ml) was obtained by following the same procedure as mentioned above for preparing the test solution, however, without adding the alkoxypolyalkylene glycol.

$$\texttt{Peroxide value (milliequivalents/g) = (S - B) x 10/I}$$

S: Amount (ml) of the titrant sodium thiosulfate when the sample was charged;
B: Blank value (ml);
I: Amount (g) of the sample charged.

Production Example 2:

An autoclave equipped with a thermometer, a pressure gauge and a stirrer was charged with 751 parts of the alkoxypolyalkylene glycol (1). A sufficient nitrogen substitution was performed by repeated pressurization with nitrogen and discharging. The temperature was set to 153°C, the pressure was set at 0.15MPa, and 1,050 parts ethylene oxide were added over 6 hours, during which the reaction temperature was maintained at 153 $\pm$ 5°C, and the reaction pressure was maintained at 0.78 MPa or below. The reaction temperature was maintained for 1 further hour to complete the addition reaction of ethylene oxide onto methanol whereby methoxypoly(n = 25) ethylene glycol [$CH_3O(CH_2CH_2O)_{25}H$] was obtained resulting from adding 25 moles ethylene oxide per each mole methanol. The thus-obtained alkoxypolyalkylene glycol (2) had a peroxide value of 0.0 milliequivalent/g as measured just after the addition reaction. The alkoxypolyalkylene glycol (2) had a solidifying point of 40°C.

Production Example 3:

An autoclave equipped with a thermometer, a pressure gauge and a stirrer was charged with 1,800 parts alkoxypolyalkylene glycol (2) and 7.7 parts of a 50% aqueous solution of sodium hydroxide. After performing a dehydration by depressurization and heating, a nitrogen substitution was performed by pressurizing with nitrogen. The temperature was set to 153°C, the pressure was set at 0.15 MPa, and 6,647 parts ethylene oxide were added over 5 hours, during which the reaction temperature was maintained at 153 $\pm$ 5°C, and the reaction pressure was maintained at 0.78 MPa or below. The reaction temperature was maintained for 1 further hour to complete the addition reaction of ethylene oxide onto methanol whereby methoxypoly (n = 120) ethylene glycol [$CH_3O (CH_2CH_2O)_{120}H$] was obtained resulting from adding 120 moles ethylene oxide per each mole methanol. The thus-obtained alkoxypolyalkylene glycol (3) had a peroxide value of 0.1 milliequivalent/g as measured just after the addition reaction. The alkoxypolyalkylene glycol (3) had a solidifying point of 55°C.

Production Example 4:

An autoclave equipped with a thermometer, a pressure gauge and a stirrer was charged with 1, 870 parts of 3-methyl-3-buten-1-ol and 6 parts of flaky sodium hydroxide. A sufficient nitrogen substitution was performed by repeated pressurization with nitrogen and discharging. The temperature of the mixture in the autoclave was raised to 120°C, the initial pressure was set at 0.09 MPa, and 9,560 parts ethylene oxide were added over 15 hours, during which the reaction

temperaturewasmaintainedat $120 \pm 5°C$, and the reaction pressure was maintained at 0.78 Mpa or below. The reaction temperature was maintained for 1 further hour to complete the addition reaction of ethylene oxide to the alcohol, whereby a 3-methyl-3-buten-1-ol poly(n = 10)ethylene glycol adduct $[CH_2=C(CH_3)CH_2CH_2O(CH_2CH_2O)_{10}H]$ was obtained resulting from adding 10 moles ethylene oxide per each mole of 3-methyl-3-buten-1-ol. The thus-obtained alkoxypolyalkylene glycol (4) had a solidifying point of 17°C.

Production Example 5:

An autoclave equipped with a thermometer, a pressure gauge and a stirrer was charged with 1,145 parts of the alkoxypolyalkylene glycol (4) and with 4 parts of a 50% aqueous solution of sodium hydroxide. After performing a dehydration by depressurization and heating, a nitrogen substitution was performed by pressurizing with nitrogen. The temperature was set to 120°C, the pressure was set at 0.16 MPa, and 3, 825 parts ethylene oxide were added over 12 hours, during which the reaction temperature was maintained at $120 \pm 5°C$, and the reaction pressure was maintained at 0.78 MPa or below. The reaction temperature was maintained for 1 further hour, whereby a 3-methyl-3-buten-1-ol poly(n = 50)ethylene glycol adduct. $[CH_2=C(CH_3)\ CH_2CH_2O\ (CH_2CH_2O)_{50}H]$ was obtained resulting from adding 50 moles ethylene oxide per each mole 3-methyl-3-buten-1-ol. The thus-obtained alkoxypolyalkylene glycol (5) had a solidifying point of 52°C and had a hydroxyl value of 25.1 mg KOH/g, a PEG content of 6.1% and an isoprene content of 960 ppm, as measured respectively by the methods described below.

Method of hydroxyl value determination:

(1) Phthalic anhydride (35 g) was dissolved in 200 ml pyridine (special reagent grade), and the thus-prepared phthalating reagent was stored in a light resistant bottle. (2) About 2.4 g of the sample were placed in a flask equipped with a Teflon-stopper and accurately measured to a precision of 0.1 mg. (3) The phthalating reagent (9 ml) was added by means of a dispenser. The phthalating reagent in the dispenser was sufficiently purged prior to use so that the measurement error could be reduced. (4) In a blank procedure, three flasks containing no sample were prepared and 9 ml of the phthalating reagent were added to each flask using the dispenser. (5) The sample-containing flask was stoppered and heated on a hot plate (trademark: "HGT-180"; product of Toshiba) adjusted to a surface temperature of $120 \pm 5°C$ to perform a esterification reaction. The reaction time was 30 minutes. The blank flasks were not heated. (6) During heating, the reaction mixture was stirred once or twice while taking care not to scatter the same. (7) After cooling to room temperature, about 50 ml of pure water were added. (8) The flask was connected to an automatic titrator (trademark: "COMTITE 500"; product of Hiranuma Sangyo), and titration was carried out with 0.5 N potassium hydroxide solution. The 0.5 N potassium hydroxide solution in the buret was sufficiently purged prior to use to remove bubbles. (9) Two or three measurements were carried out for each sample, and the mean value was calculated. (10) In case the sample was alkaline or acidic, the hydroxyl value of the sample was determined by correcting the hydroxyl value obtained according to the formula given below. (11) Where necessary, the average molecular weight and the number of moles of ethylene oxide added were calculated based on the hydroxyl value obtained.

$$\texttt{Hydroxyl value = (B - A) x 0.5 x 56.11/G - AC + AG}$$

B: Amount (ml) of the titrant in the blank test;
A: Amount (ml) of the titrant for the sample;
F: 0.5 N, concentration of the potassium hydroxide solution:
G: Weight (g) of the sample taken;
AC: Alkali value (mg KOH/g) of the sample;
AV: Acid value (mg KOH/g) of the sample.

Method of PEG content determination :

The PEG content was determined by high performance liquid chromatography under the following conditions:

PEG content measuring conditions:

Liquid feeder: Hitachi model L-6000 (trademark);

Automatic sampler: Hitachi model L-7200 (trademark);
Analyzer: Shimadzu model LC-10 (trademark);
RI detector: GL Science model 504R (trademark);
Column used: Shodex model Asahipak GF-310 (trademark) (300 mm in length), one column;
Column temperature: 40°C;
Eluent: pure water;
Flow rate: 1.5 ml/min;
Injection size: 20 μl.

Method of isoprene content determination:

The isoprene content was determined by gas chromatography-mass spectrometry (GC-MS) under the following conditions.

Isoprene content measuring conditions;

GC-MS: Shimadzu model GC-17A and QP-5000 (trademarks);
Head space: Perkin-Elmer model HS-40 (trademark);
Column: J&W model DB-1 (trademark) (0.32 mm in inside diameter x 60 m in length x 1 μl in membrane thickness);
Mobile phase: helium gas;
Flow rate: 130 kPa (head space inlet regulator);
Column temperature programming: 5°C/min from 80 to 250°C, followed by maintaining at 25°C for 10 minutes;
Injection temperature: 250°C;
HS sample heating conditions: 130°C x 10 minutes;
HS needle temperature: 170°C;
HS trans temperature: 170°C;
GC-MS interface temperature: 250°C.

Example 1:

Filling a vessel step:

A nitrogen line equipped with a purge valve was connected with the vent valve of a stainless steel (SUS 316L) container (ISO container, capacity: 24,000 L) equipped with a pressure gauge, a thermometer, a heating means, a manhole, a vent valve, a safety valve, an upper liquid inlet and a lower liquid outlet, among others. The container interior space was pressurized to 0.30 MPa. Thereafter, the purge valve was opened to reduce the container inside pressure to 0. 002 MPa, and the purge valve was closed. The container was again pressurized with nitrogen to 0.30 MPa and then depressurized. This procedure was repeated 5 times, whereby the oxygen concentration within the ISO container was reduced to 0.08%.
Then, the container was filled with 19,500 kg of the alkoxypolyalkylene glycol (2) as obtained in Production Example 2 and forming a liquid at 55°C. This filling was performed through the upper liquid inlet by means of the pump while taking care to prevent air from entering the container. Simultaneously with the start of filling, the purge valve was opened so that the container interior space might not be pressurized. Simultaneously with the completion of filling, the purge valve was closed so that air might not enter the container. Then, the container interior space was pressurized with nitrogen to 0.1 MPa (gauge pressure), and the container was tightly closed. The thermometer fitted to the container showed a temperature of 54°C.

Transfer step:

The above container, in a tightly closed state, was transferred by sea over a period of 1.5 months. At the time of arrival at the destination, the thermometer showed a temperature of 22°C, and the pressure gauge slowed a pressure of 0.07 MPa. It was thus considered that the content has formed a solid body.

Discharging step :

The container as tightly closed was heated by passing steam at 0.2 MPa through the jacket type heating means

(heating surface: 7.5m$^2$). 22 hours later than starting the heating, the thermometer of the container showed a temperature of 63°C, but the pressure gauge showed a pressure of 0.089 MPa; accordingly the steam feeding was controlled so that the temperature might be maintained at 60 ± 10°C. 37 hours later than starting the heating, the container thermometer showed a temperature of 68°C, and the pressure gauge showed a pressure of 0.11 MPa.

A flexible line for transfer was connected with the lower discharge valve, and the surrounding of the discharge valve was heated by blowing steam against the same. Then, a nitrogen line equipped with a purge valve was connected with the vent valve of the container, and the purge valve was opened to equalize the container inside pressure with the atmospheric pressure. The manhole was opened and it was confirmed that the alkoxypolyalkylene glycol in the container had been completely melted. Simultaneously with the opening of the manhole, care was taken to prevent the entrance of air through the manhole by passing nitrogen through the nitrogen line. While passing nitrogen into the gaseous phase portion in the container, transfer was started through the lower discharge valve to a storage tank by means of a pump. One hour later than starting the transfer through the pump, the transfer of the whole content to the storage tank was completed. The one and a half month transfer (mainly by sea) was finished.

The gaseous phase portion in the storage tank was purged with nitrogen, and the material was stored with a temperature control at 60 ± 10°C. The material in the storage tank was used before long. At the time of use, the peroxide value of the alkoxypolyalkylene glycol (2A1) was 0.25 milliequivalent/g.

Esterification:

A glass-made reaction vessel equipped with a thermometer, a stirrer, a byproduct water separator and a reflux condenser was charged with 16, 500 parts of the alkoxypolyalkylene glycol (2A1), with 4, 870 parts methacrylic acid, with 1, 070 parts of cyclohexane as dehydrating solvent, with 667 parts of a 70% aqueous solution of paratoluenesulfonic acid as acid catalyst and with 5 parts of phenothiazine as polymerization inhibitor. The esterification reaction was started by raising the temperature to 107°C while stirring the mixture solution. After 20 hours, the esterification degree has reached a level of at least 99%. The mixture was cooled to 60°C or below, and 2,600 parts of a 4.2% aqueous solution of sodium hydroxide and 2,490 parts water were added. Then, the temperature was again raised and the cyclohexane was distilled off azeotropically with water to provide an 80% aqueous monomer mixture solution (MA1). During the above esterification reaction, no gel-like matter formed.

Polymerization:

Then, a glass-made reaction vessel equipped with a thermometer, a stirrer, a dropping funnel, a nitrogen inlet tube and a reflux condenser was charged with 8,220 parts of water. The reaction vessel interior space was purged with nitrogen under stirring and the temperature of water was raised to 80°C in a nitrogen atmosphere. Further, a mixed solution of 13,250 parts of the 80% aqueous monomer mixture solution (MA1) obtained in the above manner and 100 parts of mercaptopropionic acid was added dropwise to the reaction vessel over 4 hours. Simultaneously with the start of this dropping, an aqueous solution of 125 parts of ammonium persulfate as polymerization initiator in 1,000 parts of water was added dropwise over 5 hours. After completion of the dropwise addition of the polymerization initiator the reaction temperature was maintained at 80°C for 1 further hour to complete the polymerization reaction. The reaction mixture was neutralized to pH 7 with a 50% aqueous solution of sodium hydroxide to provide an aqueous solution (A1) of a polymer having a weight average molecular weight of 20,000; (measured by gel permeation chromatography (GPC) and expressed on the polyethylene glycol equivalent basis; the same shall apply, hereinafter).

A GPC chart of the aqueous polymer solution (A1) shows no high molecular peak. A portion of the aqueous polymer solution (A1) was placed in a transparent glass bottle (200 ml) and observed visually; no gel-like matter was detected. In addition, no gel-like matter accumulation was observed in the strainer of the transfer pump.

Measuring the conversion rate of the esterification reaction:

This conversion rate is the percentage derived from the amount of the reactant alcohol as charged and the amount thereof at the time of completion the reaction and is, for example, the value (%) calculated using the formula given below, following determination of respective peak areas by liquid chromatography (LC) under the conditions shown below:

$$\text{Esterification percentage (conversion \%)} = [(S - T)/S] \times 100$$

S: the area measured for the alcohol charged;

T: the area measured for the alcohol after completion of the esterification.

Conversion measuring conditions

Analyzing apparatus: Waters Millennium Chromatography Manager (trademark)

Detector: Waters 410 RI detector (trademark)

Columns to be used: GL Science Inertsil ODS-2 (inside diameter 4.6 mm, length 250 mm) (trademark), three columns

Column temperature: 40°C

Eluent: A solution prepared by mixing 8,946 g water, 6, 000 g acetonitrile and 54 g acetic acid and adjusting the pH to 4.0 by means of a 30% aqueous solution of sodium hydroxide. Flow rate: 0.6 ml/min.

Molecular weight measuring conditions:

Model: LC Module 1 plus (trademark; product of Waters)

Detector: Differential refractometer (RI) 410 (trademark;

product of Waters)

Eluent: A solution prepared by mixing 0.05 M sodium acetate and acetonitrile-deionized water (40/60) and adjusting the pH to 6.0 by means of acetic acid.

Eluent flow rate: 1.0 ml/min.

Columns:

TSK-GEL guard column (inside diameter 6 mm, length 40 mm)

+ TSK-GEL G-4000 SWXL (inside diameter 7.8 mm, length 300 mm)

+ TSK-GEL G-3000 SWXL (inside diameter 7.8 mm, length 300 mm)

+ TSK-GEL G-2000 SWXL (inside diameter 7.8 mm, length 300 mm)

(all being trademarks; products of Tosoh Corp.)

Column oven temperature: 40°C.

Working curve: The working curve varies according to the molecular weights and the number of standard samples and the molecular weights thereof, further, by the method of drawing baseline and the method of obtaining an approximate expression for the working curve, among others. Therefore, the following conditions are preferably established.

1. Reference samples:

Commercially available standard polyethylene oxide (PEO) species and standard polyethylene glycol (PEG) species are used as the standard samples. Preferably, those having the following molecular weights are used as the standard samples: 1470, 4250, 7100, 12600, 24000, 46000, 85000, 219300, 272500 (9 points in total). The following standard samples have been considered and selected:

(1) At least 7 standard samples having a molecular weight not less than 90;
(2) At least one standard sample having a molecular weight between 900 and 2,000;
(3) At least 3 standard samples having amolecularweightbetween 2,000 and 60,000;
(4) At least one standard sample having a molecular weight of 200,000 $\pm$ 30, 000;
(5) At least one standard sample having a molecular weight of 270, 000 $\pm$ 30,000.

2. Method of drawing baseline:

Upper limit to molecular weight: A point where a peak appears from a horizontal and stable baseline.

Lower limit to molecular weight: A point where the main peak detection is finished.

3. Approximate expression of the working curve:

Based on the working curve ("elution time" versus "logarithm of molecular weight") constructed by using the above standard samples, a cubic approximate expression is derived and this is used in calculations.

Comparative Example 1:

Filling a vessel step:

In a laboratory, a 2.4-liter vessel (SUS 316L) equipped with a pressure gauge and a valve was purged with nitrogen in the same manner as described in Example 1 and filled with 1.95 kg of the alkoxypolyalkylene glycol (2) obtained in Production Example 2. The vessel was pressurized to 0.1 MPa with nitrogen and then tightly closed.

Transfer step:

Instead of transferring the ISO container of Example 1 over a period of 1.5 months at 60°C within a heat insulation, this vessel was stored at a temperature of 60°C above the solidifying point for 1.5 months to provide an alkoxypolyalkylene glycol (2C1).

Discharging step:

The alkoxypolyalkylene glycol (2C1) showed a peroxide value (POV) of 1.3 milliequivalents/g. The cost of transportation for the case of continued temperature maintenance at 60°C during transportation on a ship was estimated and found to become higher by about 50%. No actual transportation on the ISO container scale was carried out accordingly.

Esterification:

The alkoxypolyalkylene glycol (2Cl) having a peroxide value of 1.3 milliequivalents/g was subjected to esterification in the same manner as described in Example 1 to provide an 80% aqueous monomer mixture solution (MC1). During esterification, a gel-likematter was formed. When aportionof the 80% aqueous monomer mixture solution (MC1) was placed in a transparent glass bottle (200 ml) and observed visually, a gel-like floating matter was detected. The examination of a GPC chart, showed a small peak indicative for the presence of a high molecular fraction.

Example 2:

Storage

A plastic vessel was filled with 1.5 kg of the alkoxypolyalkylene glycol (2) obtained in Production Example 2 and forming a liquid at 70°C in an atmosphere of air. After filling, the vessel was tightly closed and allowed to stand at room temperature. After 5 hours, the content has solidified. One week later, the plastic vessel was placed in a drier maintained at 90°C, and the contents was melted over a 12 hours period with occasional shaking. The thus melted alkoxypolyalkylene glycol (2A2) showed a peroxide value of 0.20 milliequivalent/g.

Esterification:

A glass-made reaction vessel equipped with a thermometer, a stirrer, a byproduct water separator and a reflux condenser was charged with 1,484 g of the alkoxypolyalkylene glycol (2A2), with 121 g methacrylic acid, with 80.2 kg cyclohexane as dehydrating solvent, with 51 g of a 70% aqueous solution of paratoluenesulfonic acid as acid catalyst and with 0.40 g phenothiazine as polymerization inhibitor. The esterification reaction was carried out while maintaining the temperature at 115 to 125°C and stirring the mixture solution. After 40 hours, the esterification degree has reached a level of at least 99%. Then, 189 g of a 4.2% aqueous solution of sodium hydroxide and 178 g water were added. Then, the temperature was again raised and the cyclohexane was distilled off azeotropically with water. After minor adjustment of the component, an 80% aqueous monomer mixture solution (MA2) was obtained. During the above esterification reaction, no gel-like matter was formed.

Comparative Example 2:

Storage

A plastic vessel was filled with 1.5 kg of the alkoxypolyalkylene glycol (2) obtained in Production Example 2 and forming a liquid at 70°C in an atmosphere of air. After filling, the vessel was placed in a drier maintained at 90°C and allowed to stand there. After one week, this alkoxypolyalkylene glycol (2C2) showed a peroxide value of 1.9 milliequivalents/g.

Esterification:

The alkoxypolyalkylene glycol (2C2) was subjected to esterification in the same manner as described in Example 2 to provide an 80% aqueous monomer mixture solution (MC2). During the above esterification reaction, a gel-like matter was formed. When a portion of the 80% aqueous monomer mixture solution (MC2) was placed in a transparent glass bottle (200 ml), and observed visually, a gel-like floating matter was detected. The examination of a GPC chart showed a small peak indicative for the presence of a highmolecular fraction. The total amount of the gel-like matter formed during the esterification reaction was about 3 g.

Example 3:

Storage

A SUS vessel was filled with 5 kg of the alkoxypolyalkylene glycol (5) obtained in Production Example 5 and forming a liquid at 120°C. After filling, a nitrogen purging was carried out (1/6 × three times). Thereafter, the vessel was tightly closed and allowed to stand at room temperature.
Two days later, the SUS vessel was placed in a drier maintained at 120°C and allowed to stand for 9 hours to completely melt the content. The thus-obtained alkoxypolyalkylene glycol (5A3) showed a hydroxyl value of 25.8 mg KOH/g, a PEG content of 8.5% by weight and an isoprene content of 1,645 ppm.

Polymerization

Then, a glass-made reaction vessel equipped with a thermometer, a stirrer, a dropping funnel, a nitrogen inlet tube and a reflux condenser was charged with 1,496 parts of the above alkoxypolyalkylene glycol (5A3), with 131 parts maleic anhydride and with 1,090 parts water. The reaction vessel interior space was purged with nitrogen under stirring. Then, the contents was heated in a nitrogen atmosphere to raise the water temperature to 60°C. Further, an aqueous solution of 6.2 parts of 2,2'-azobis(2-amidinopropane) dihydrochloride (trademark: NC-32W; product of Nippo Chemical) as polymerization initiator in 35.2 parts water were added. Thereafter, the reaction temperature was maintained at 60°C for 7 hours and then raised to 80°C and maintained for 1 hour. The reaction mixture was neutralized topH 7 with a 48% aqueous solution of sodium hydroxide to provide an aqueous solution (A3) of a polymer having a weight average molecular weight of 26, 300. A GPC chart of the aqueous polymer solution (A3) is shown in Fig. 1.
The GPC chart of the aqueous polymer solution (A3), confirmed that the proportion of trimer and higher polymers amounts 70%. The GPC chart of the aqueous polymer solution (A3) had no peak indicative of a high molecular fraction. A portion of the aqueous polymer solution (A3) was placed in a transparent glass bottle (200 ml) and observed visually; no gel-like matter was detected. In addition, no gel-like matter accumulation was confirmed in the strainer of the transfer pump.

Comparative Example 3:

Storage

A SUS vessel was filled with 5 kg of the alkoxypolyalkylene glycol (5) obtained in Production Example 5 and forming a liquid at 120°C. After filling, a nitrogen purging was carried out (1/6 × three times). Thereafter, the vessel was tightly closed and maintained at 120°C. Two days later, this alkoxypolyalkylene glycol (5C3) showed a hydroxyl value of 28.3 mg KOH/g, a PEG content of 17.3% by weight and an isoprene content of 3,725 ppm.

Polymerization:

The polymerization was carried out in the same manner as described in Example 3 to provide an aqueous solution (C3) of a polymer having a weight average molecular weight of 15,000. A GPC chart of the aqueous polymer solution (C3) confirmed that the trimer and higher polymer proportion amounts 50%.

The results of Examples 1 to 3 and Comparative Examples 1 to 3 are shown in the following Table 2.

Table 2 :

|  | Example 1 | Comparative Example 1 | Example 2 | Comparative Example 2 | Example 3 | Comparative Example 3 |
|---|---|---|---|---|---|---|
| Alkoxypolyalkylene glycol species | Methoxypoly (n = 25) ethylene glycol | Methoxypoly (n = 25) ethylene glycol | Methoxypoly (n =25) ethylene glycol | Methoxypoly (n =25) ethylene glycol | 3-Methyl-3-buten-1-ol poly (n=50) ethylene glycol adduct | 3-Methyl-3-buten-1-ol poly (n=50) ethylene glycol adduct |
| Alkoxypolyalkylene glycol after storage | 2A1 | 2C1 | 2A2 | 2C2 | 5A3 | 5C3 |
|  | POV=0.25 | POV=1.3 | POV=0.20 | POV=1.9 | PEG:8.5% | PEG:17.3% |
| Aqueous monomer mixture solution | MA1 | MC1 | MA2 | MC2 | - | - |
| Aqueous polymer solution | Al | - | - | - | A3 (26,000) | C3(15,000) |
| Storage period | 1.5 months | 1.5 months | I week | 1 week | 2 days | 2 days |
| Amount stored | 19.5t | 1.95kg | 1.5kg | 1.5kg | 5kg | 5kg |

## Claims

1.  A method for treating

    an alkoxypolyalkylene glycol-containing material suitable for producing a a polymer suitable for cement additive which is carried out under inert gas atmosphere and comprises a step of filling a vessel, a step of storing and/or transferring and a step of discharging in that order
    said alkoxypolyalkylene glycol being represented by the following general formula (1):

    $$R^1O(R^2O)_nH \qquad (1)$$

    wherein:

    $R^1$ represents a hydrocarbon group containing 1 to 30 carbon atoms;
    $R^2O$ group represents an oxyalkylene group containing 2 to 18 carbon atoms, and each $R^2O$ group may be the same or different, and
    "n" represents the average number of moles of oxyalkylene groups represented by $R^2O$ as added and is a number of 2 to 300;

    **wherein**
    said vessel has a capacity of from 1 to 30 $m^3$; and
    said step of storing and/or transferring being carried out at a temperature not higher than the solidifying point of the material suitable for producing a polymer suitable for cement additive; and
    said step of discharging is initiated by heating and melting said material suitable for producing a polymer suitable for cement additive within said vessel at a temperature not lower than the solidifying point thereof in order to discharge said material suitable for producing a polymer suitable for cement additive out from said vessel in liquid form.

2.  The method for treating an alkoxypolyalkylene glycol-containing material suitable for producing a polymer suitable for cement additive according to claim 1,

**wherein**

said step of filling the vessel is carried out by pressurization with an inert gas and tightly closing; and said step of discharging is initiated by heating and melting said material suitable for producing a polymer suitable for cement additive at a temperature not lower than the solidifying point thereof within the tightly closed vessel.

3. The method for treating an alkoxypolyalkylene glycol-containing material suitable for producing a polymer suitable for cement additive according to claim 1 or 2,
   **wherein**
   the filling percentage in the step of filling said vessel with the alkoxypolyalkylene glycol-containing material suitable for producing a polymer suitable for cement additive is 80 to 95 %.

4. The method for treating an alkoxypolyalkylene glycol-containing material suitable for producing a polymer suitable for cement additive polymer according to claims 2 or 3,
   **wherein**
   said step of heating and melting the alkoxypolyalkylene glycol-containing material suitable for producing a polymer suitable for cement additive within the tightly closed vessel is carried out so long until the gaseous phase pressure within the tightly closed vessel reaches a level higher than that pressure level at the time of tightly closing the vessel in the step of filling.

5. The method for treating an alkoxypolyalkylene glycol-containing material suitable for producing a polymer suitable for cement additive according to claim 4,
   **wherein**
   said heating is effected by providing the vessel with an external jacket and passing steam or warm water through said jacket.

6. The method for treating an alkoxypolyalkylene glycol-containing material suitable for producing a polymer suitable for cement additive according to claim 4 or 5,
   **wherein**
   said heating is effected to a temperature not higher than 70°C above the solidifying temperature of said material suitable for producing a polymer suitable for cement additive.

7. The method for treating an alkoxypolyalkylene glycol-containing material suitable for producing a polymer suitable for cement additive according to claims 1 to 6,
   **wherein**
   additional inert gas is introduced into the vessel when discharging said material suitable for producing a polymer suitable for cement additive from said vessel.

8. The method for treating an alkoxypolyalkylene glycol-containing material suitable for producing a polymer suitable for cement additive according to claims 1 to 7,
   **wherein**
   said $R^2O$ represents an oxyalkylene group containing 2 to 8 carbon atoms; and
   "n" in the general formula (1) is a number of 10 to 200.

9. The method for treating an alkoxypolyalkylene glycol-containing material suitable for producing a polymer suitable for cement additive according to claim 1 to 8,
   **wherein**
   said vessel is made of stainless steel, aluminium or iron.

**Patentansprüche**

1. Verfahren zur Behandlung von einem Alkoxypolyalkylenglykol-enthaltenden Material, das zur Herstellung eines Polymer geeignet ist, das seinerseits als Zementzusatzmittel geeignet ist,
   wobei dieses Verfahren unter Inertgasatmosphäre durchgeführt wird und - in dieser Reihenfolge - nachstehende Verfahrensschritte umfasst:

   - einen Verfahrensschritt zum Befüllen eines Behälters,
   - einen Verfahrensschritt zum Lagern und/oder Transportieren, und

- einen Verfahrensschritt zum Herausbringen des Materials aus dem Behälter;

wobei dieses Alkoxypolyalkylenglykol der nachstehenden allgemeinen Formel (1) entspricht:

$$R^1O(R^2O)_nH \qquad (1),$$

wobei:

$R^1$ steht für eine Kohlenwasserstoffgruppe mit 1 bis 30 Kohlenstoffatomen; die $R^2O$-Gruppe steht für eine Oxyalkylengruppe mit 2 bis 18 Kohlenstoffatomen, wobei diese $R^2O$-Gruppen je gleich oder verschieden sein können; und

"n" bezeichnet den Mittelwert der Mole an vorhandenen $R^2O$-Olkyalkylengruppen und steht für eine Zahl von 2 bis 300;

**dadurch gekennzeichnet, dass**

- dieser Behälter ein Fassungsvermögen von 1 bis 30 m$^3$ hat;
- dieser Verfahrensschritt zum Lagern und/oder Transportieren bei einer Temperatur nicht oberhalb der Erstarrungstemperatur des Materials durchgeführt wird, das zur Herstellung eines Polymer geeignet ist, das seinerseits als Zementzusatzmittel geeignet ist; und
- dieser Verfahrensschritt zum Herausbringen des Materials aus dem Behälter dadurch eingeleitet wird, dass das Material, das zur Herstellung eines Polymer geeignet ist, das seinerseits als Zementzusatzmittel geeignet ist, innerhalb des Behälters erwärmt und zum Schmelzen gebracht wird bei einer Temperatur, die nicht niedriger ist als die Erstarrungstemperatur des Material, um dieses Material, das zur Herstellung eines Polymer geeignet ist, das seinerseits als Zementzusatzmittel geeignet ist, in flüssiger Form aus diesem Behälter herauszubringen.

2.  Verfahren nach Anspruch 1
    zur Behandlung von einem Alkoxypolyalkylenglykol-enthaltenden Material, das zur Herstellung eines Polymer geeignet ist, das seinerseits als Zementzusatzmittel geeignet ist,
    **dadurch gekennzeichnet, dass**

    - dieser Verfahrensschritt zum Befüllen des Behälters in der Weise durchgeführt wird, dass der Behälter nach dem Befüllen mit dem Material mit dem Inertgas druckbeaufschlagt wird und danach hermetisch dicht verschlossen wird; und
    - dieser Verfahrensschritt zum Herausbringen des Materials aus dem Behälter dadurch eingeleitet wird, dass das Material, das zur Herstellung eines Polymer geeignet ist, das seinerseits als Zementzusatzmittel geeignet ist, innerhalb des hermetisch dicht verschlossenen Behälters erwärmt und zum Schmelzen gebracht wird bei einer Temperatur, die nicht niedriger ist als die Erstarrungstemperatur des Material bleibt.

3.  Verfahren nach Anspruch 1 oder 2
    zur Behandlung von einem Alkoxypolyalkylenglykol-enthaltenden Material, das zur Herstellung eines Polymer geeignet ist, das seinerseits als Zementzusatzmittel geeignet ist,
    **dadurch gekennzeichnet, dass**
    bei diesem Verfahrensschritt zum Befüllen dieses Behälters der Behälter bis zu einem Füllungsgrad von 80 bis 95 % gefüllt wird mit dem Alkoxypolyalkylenglykol-enthaltenden Material, das zur Herstellung eines Polymer geeignet ist, das seinerseits als Zementzusatzmittel geeignet ist.

4.  Verfahren nach Anspruch 2 oder 3
    zur Behandlung von einem Alkoxypolyalkylenglykol-enthaltenden Material, das zur Herstellung eines Polymer geeignet ist, das seinerseits als Zementzusatzmittel geeignet ist,
    **dadurch gekennzeichnet, dass**
    dieser Verfahrensschritt zur Erwärmung und zum Schmelzen des Alkoxypolyalkylenglykol-enthaltenden Materials, das zur Herstellung eines Polymer geeignet ist, das seinerseits als Zementzusatzmittel geeignet ist, innerhalb des hermetisch dicht verschlossenen Behälters so lange durchgeführt wird, bis der Gasphasendruck innerhalb des hermetisch dicht verschlossenen Behälters einen Wert erreicht hat, der höher ist, als der Gasdruck zum Zeitpunkt des hermetisch dicht Verschließens des Behälters im Verlauf des Verfahrensschrittes zum Befüllen des Behälters.

5.  Verfahren nach Anspruch 4

zur Behandlung von einem Alkoxypolyalkylenglykol-enthaltenden Material, das zur Herstellung eines Polymer geeignet ist, das seinerseits als Zementzusatzmittel geeignet ist,

**dadurch gekennzeichnet, dass**

diese Erwärmung in der Weise erfolgt, dass der Behälter mit einer äußeren Ummantelung versehen wird, und Wasserdampf oder warmes Wasser durch diese Ummantelung geleitet wird.

6. Verfahren nach Anspruch 4 oder 5

zur Behandlung von einem Alkoxypolyalkylenglykol-enthaltenden Material, das zur Herstellung eines Polymer geeignet ist, das seinerseits als Zementzusatzmittel geeignet ist,

**dadurch gekennzeichnet, dass**

bei dieser Erwärmung auf eine Temperatur erwärmt wird, welche die Erstarrungstemperatur des Materials, das zur Herstellung eines Polymer geeignet ist, das seinerseits als Zementzusatzmittel geeignet ist, um nicht mehr als 70° C übersteigt.

7. Verfahren nach einem der Ansprüche 1 bis 6

zur Behandlung von einem Alkoxypolyalkylenglykol-enthaltenden Material, das zur Herstellung eines Polymer geeignet ist, das seinerseits als Zementzusatzmittel geeignet ist,

**dadurch gekennzeichnet, dass**

beim Verfahrensschritt zum Herausbringen des Materials, das zur Herstellung eines Polymer geeignet ist, das seinerseits als Zementzusatzmittel geeignet ist, aus dem Behälter zusätzliches Inertgas in den Behälter eingeführt wird.

8. Verfahren nach einem der Ansprüche 1 bis 7

zur Behandlung von einem Alkoxypolyalkylenglykol-enthaltenden Material, das zur Herstellung eines Polymer geeignet ist, das seinerseits als Zementzusatzmittel geeignet ist,

**dadurch gekennzeichnet, dass**

in obiger allgemeiner Formel (1)

- $R^2O$ für eine Oxyalkylengruppe mit 2 bis 8 Kohlenstoffatomen steht; und
- "n" für eine Zahl von 10 bis 200 steht.

9. Verfahren nach einem der Ansprüche 1 bis 8

zur Behandlung von einem Alkoxypolyalkylenglykol-enthaltenden Material, das zur Herstellung eines Polymer geeignet ist, das seinerseits als Zementzusatzmittel geeignet ist,

**dadurch gekennzeichnet, dass**

dieser Behälter aus rostfreiem Stahl, aus Aluminium oder aus Eisen gefertigt ist.

**Revendications**

1. Un procédé pour le traitement d'un matériau comprenant de l'alcoxy-polyalkylène glycol qui convient à la fabrication d'un polymère convenant comme adjuvant de ciment,

ce procédé étant réalisé dans une atmosphère de gaz inerte et comprenant les étapes suivantes dans l'ordre suivant :

- une étape de remplissage d'un réservoir
- une étape de stockage et/ou de transport et
- une étape de déchargement du réservoir

ledit alcoxy-polyalkylène glycol répondant à la formule générale suivante (1)

$$R^1O(R^2O)_nH \qquad (1)$$

dans laquelle

$R^1$ représente un groupe hydrocarbure un atome ayant 1 à 30 atomes de carbone ;

le groupe $R^2O$ représente un groupe oxyalkylène ayant 2 à 18 atomes de carbone, chacun pouvant être identique ou différent ;

n représente le nombre moyen de moles des groupes oxyalkylène représentés par $R^2O$ et a un nombre allant de 2 à 300 ;

**caractérisé en ce que** :

- ce réservoir a une capacité de 1 à 30 m$^3$ ;
- l'étape de stockage et/ou de transport est réalisée à une température qui n'est pas supérieure à la température de solidification du matériau qui convient à la fabrication d'un polymère convenant comme adjuvant de ciment ; et que
- l'étape de déchargement du réservoir est initiée par l'échauffement et la fusion du matériau qui convient à la fabrication d'un polymère convenant comme adjuvant de ciment, à l'intérieur du réservoir à une température qui n'est pas inférieure à la température de solidification du matériau pour faire sortir ce matériau qui convient à la fabrication d'un polymère convenant comme adjuvant de ciment sous forme liquide du réservoir.

2. Le procédé conformément à la revendication 1,
   pour le traitement d'un matériau comprenant de l'alcoxy-polyalkylène glycol qui convient à la fabrication d'un polymère convenant comme adjuvant de ciment,
   **caractérisé en ce que** :

   - l'étape de remplissage du réservoir est réalisée en appliquant après le remplissage une pression par un gaz inerte sur le réservoir qui est ensuite fermé hermétiquement ; et que
   - l'étape de déchargement du réservoir est initiée par l'échauffement et la fusion du matériau qui convient à la fabrication d'un polymère convenant comme adjuvant de ciment à l'intérieur du réservoir fermé hermétiquement à une température qui n'est pas inférieure à la température de solidification du matériau.

3. Le procédé conformément à une des revendications 1 ou 2,
   pour le traitement d'un matériau comprenant de l'alcoxy-polyalkylène glycol qui convient à la fabrication d'un polymère convenant comme adjuvant de ciment,
   **caractérisé en ce que:**

   - le degré de remplissage du réservoir lors de l'étape de remplissage du réservoir par le matériau qui convient à la fabrication d'un polymère convenant comme adjuvant de ciment, est de 80 à 95%.

4. Le procédé conformément à une des revendications 2 ou 3,
   pour le traitement d'un matériau comprenant de l'alcoxy-polyalkylène glycol qui convient à la fabrication d'un polymère convenant comme adjuvant de ciment,
   **caractérisé en ce que** :

   l'étape comprenant l'échauffement et la fusion du matériau qui convient à la fabrication d'un polymère convenant comme adjuvant de ciment à l'intérieur du réservoir fermé hermétiquement est réalisée jusqu'à ce que la pression de la phase gazeuse ait atteint une valeur qui est supérieure à la valeur de pression au moment où le réservoir est fermé hermétiquement pendant la phase de remplissage.

5. Le procédé conformément à la revendication 4,
   pour le traitement d'un matériau comprenant de l'alcoxy-polyalkylène glycol qui convient à la fabrication d'un polymère convenant comme adjuvant de ciment,
   **caractérisé en ce que** :

   l'échauffement est réalisé en équipant le réservoir d'une enveloppe à l'intérieur de laquelle l'eau chaude ou la vapeur d'eau est introduite.

6. Le procédé conformément à une des revendications 4 ou 5,
   pour le traitement d'un matériau comprenant de l'alcoxy-polyalkylène glycol qui convient à la fabrication d'un polymère convenant comme adjuvant de ciment,
   **caractérisé en ce que** :

   l'échauffement est effectué à une température qui ne dépasse pas la température de solidification du matériau qui convient à la fabrication d'un polymère convenant comme adjuvant de ciment de plus de 70%.

7. Le procédé conformément à une des revendications 1 à 6,

pour le traitement d'un matériau comprenant de l'alcoxy-polyalkylène glycol qui convient à la fabrication d'un polymère convenant comme adjuvant de ciment,
**caractérisé en ce que** :

du gaz inerte supplémentaire est introduit dans le réservoir pendant la décharge du matériau qui convient à la fabrication d'un polymère convenant comme adjuvant de ciment.

**8.** Le procédé conformément à une des revendications 1 à 7,
pour le traitement d'un matériau comprenant de l'alcoxy-polyalkylène glycol qui convient à la fabrication d'un polymère convenant comme adjuvant de ciment,
**caractérisé en ce que** :

dans la formule générale ci-dessus (1)
ledit groupe **$R^2O$** représente un groupe oxyalkylène ayant 2 à 8 atomes de carbone ; et
n représente un nombre allant de 10 à 200.

**9.** Le procédé conformément à une des revendications 1 à 7,
pour le traitement d'un matériau comprenant de l'alcoxy-polyalkylène glycol qui convient à la fabrication d'un polymère convenant comme adjuvant de ciment,
**caractérisé en ce que** :

ledit réservoir est fait en inox, en aluminium ou en fer.

Fig.1

**EP 1 229 005 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000154049 A